# DEMANDE DE BREVET EUROPEEN

(11) **EP 2 410 421 A1**
(43) Date de publication de la demande: **25.01.2012**
(21) Numéro de dépôt: 11174955.2
(22) Date de dépôt: 22.07.2011
(51) Int. Cl.: G06F 3/12

(54) **Système d'impression, client d'impression et imprimantes, et procédés, programmes d'ordinateur et moyens de stockage correspondants**

(30) Priorité: 22.07.2010 FR 1056018
(71) Demandeur: SAGEMCOM DOCUMENTS SAS, 92500 Rueil Malmaison (FR)
(72) Inventeur: Sartori, David, 92500 RUEIL MALMAISON (FR)
(74) Mandataire: Maillet, Alain

(57) **Abrégé**

Un réseau de communication comprend au moins un client d'impression, au moins deux imprimantes maîtres gérant des files d'attente d'impression, et une imprimante par laquelle un utilisateur désire effectuer une impression de document. Le client d'impression, actionné par l'utilisateur, découpe le document à imprimer en tronçons et transmet chacun de ces tronçons vers au moins une imprimante maître. Les tronçons sont ainsi répartis sur les imprimantes maîtres. L'utilisateur se déplace alors vers une imprimante par laquelle le document doit être imprimé et déclenche l'impression du document. L'imprimante par laquelle le document doit être imprimé reçoit (5.5) les tronçons du document à imprimer en provenance des imprimantes maîtres, reconstitue (5.6) le document à imprimer à partir des tronçons reçus et lance l'impression (5.8) du document reconstitué.

## Description

La présente invention concerne un système d'impression, un client d'impression et des imprimantes. La présente invention concerne également un procédé mis en oeuvre dans un tel système d'impression. La présente invention concerne également des procédés mis en oeuvre par un tel client d'impression et de telles imprimantes. La présente invention concerne également des programmes d'ordinateur permettant la mise en oeuvre de ces procédés et des moyens de stockage stockant de tels programmes d'ordinateur.

Un document consiste en un fichier informatique décrivant un contenu, c'est-à-dire un ensemble de données informatives lisibles par l'homme ou une machine et imprimables, associé à une mise en forme. Un document est par exemple un fichier informatique comprenant du texte et/ou des illustrations mis en forme. Une impression d'un tel document consiste en une mise sur un support physique, tel que du papier, du contenu mis en forme.

Aujourd'hui, une impression réseau implique un serveur implémenté dans l'imprimante et un client d'impression dans un programme pilote d'imprimante installé sur un ordinateur, qui prend en entrée des documents formatés par des logiciels, par exemple de bureautique, et les transmet dans une file d'attente d'impression (spooler en anglais) dudit serveur, créant ainsi des travaux d'impression. Un travail d'impression consiste en une opération d'impression à réaliser ou en cours de réalisation à laquelle sont associés un document à imprimer et des paramètres nécessaires à l'impression de ce document.

Il existe des systèmes d'impression permettant à un utilisateur d'entrer un code de sécurité au moment de demander une impression d'un document pour débloquer ensuite le document qui est alors situé dans une file d'attente d'impression. Ainsi, quand l'utilisateur se trouve devant le pupitre de l'imprimante par laquelle le document doit être imprimé, il saisit le code de sécurité qui lui a été fourni par le client d'impression lors de la demande d'impression. On évite ainsi que le document puisse être imprimé en dehors du contrôle de l'utilisateur ayant effectivement demandé l'impression.

Cependant, la fonction d'impression sécurisée par code de sécurité actuellement disponible en série ne fonctionne que grâce à une mise en mémoire temporaire du document dans une mémoire de l'imprimante, ce qui implique que cette imprimante dispose d'une capacité mémoire importante pour stocker les documents dont les impressions ont été requises parfois de manière concurrentielle par plusieurs utilisateurs. Un disque dur peut être ajouté à cet effet, ce qui conduit à des configurations plus coûteuses. Une telle fonction n'est donc accessible que sur des imprimantes haut de gamme. Ces imprimantes, accessibles via un réseau de communication et disposant de capacités de stockage, sont appelées dans la suite de la présente description imprimantes maîtres.

De plus, dans le cas où le disque dur d'une telle imprimante est subtilisé, il est possible à l'auteur du vol d'accéder à des documents en attente d'impression ou en cours d'impression et stockés sur cette imprimante. La confidentialité de ces documents n'est alors pas préservée.

Il est souhaitable de pallier ces différents inconvénients de l'état de la technique.

Il est notamment souhaitable de fournir une solution d'impression qui permette une meilleure utilisation des ressources de stockage pour l'impression de documents dans un réseau de communication.

Il est aussi souhaitable de fournir une solution d'impression qui permette de sécuriser l'impression d'un document, c'est-à-dire d'assurer que l'ordre d'impression à partir du pupitre d'une imprimante par laquelle le document doit être imprimé est émis par l'utilisateur ayant initialement ordonné le travail d'impression.

Il est aussi souhaitable de fournir une solution d'impression, basée sur une collaboration d'imprimantes maîtres stockant des travaux d'impression à effectuer dans un réseau de communication, qui permet de pallier une défaillance d'au moins une desdites imprimantes maîtres.

Il est aussi souhaitable de fournir une solution d'impression qui permette, dans le cas où le disque dur d'une telle imprimante maître est subtilisé, d'éviter qu'il puisse être rendu accès aux travaux d'impression pour lesquels cette imprimante maître collabore ou a collaboré.

Il est aussi souhaitable de fournir une solution d'impression qui permet, basée sur une collaboration d'imprimantes maîtres stockant des travaux d'impression à effectuer dans un réseau de communication, de réduire le temps nécessaire à la tâche d'impression.

L'invention concerne un client d'impression destiné à être utilisé dans un réseau de communication comportant en outre une pluralité d'imprimantes dont au moins deux sont des imprimantes, dites maîtres, disposant de capacités de stockage. Le client d'impression comprend :
- des moyens pour découper un document à imprimer en une pluralité de tronçons de document ;
- des moyens pour transmettre chaque tronçon à au moins une imprimante maître, les tronçons étant répartis sur lesdites imprimantes maîtres.

Ainsi, l'utilisation des ressources de stockage des imprimantes maîtres est répartie. De plus, dans le cas où les ressources de stockage, comme par exemple un disque dur interne, d'une imprimante maître sont subtilisées, il n'est pas possible d'obtenir l'intégralité du document à imprimer, et donc le caractère éventuellement confidentiel de ce document est préservé.

On entend par tronçon un ensemble de données consécutives correspondant à une partie seulement du document à imprimer.

Selon un mode de réalisation particulier, les moyens pour transmettre chaque tronçon vers au moins une imprimante maître comprennent des moyens pour transmettre au moins un tronçon à au moins deux imprimantes maîtres.

Ainsi, en cas de défaillance d'une imprimante maître, des tronçons peuvent être obtenus auprès d'une imprimante maître de remplacement.

Selon un mode réalisation particulier, les moyens pour transmettre chaque tronçon vers au moins une imprimante maître comprennent des moyens pour transmettre en parallèle plusieurs tronçons.

Ainsi, la durée de transmission des tronçons du document à imprimer est réduite, ce qui accélère le processus d'impression du document à imprimer.

Selon un mode de réalisation particulier, le client d'impression comprend en outre des moyens pour transmettre auxdites imprimantes maîtres une information de correspondance entre chacun desdits tronçons et chaque imprimante maître à laquelle ledit tronçon est transmis.

Selon un mode de réalisation particulier, le client d'impression comprend en outre des moyens pour obtenir un code de sécurité permettant un accès ultérieur aux tronçons sur les imprimantes maîtres auxquelles lesdits tronçons sont transmis.

Ainsi, seul un utilisateur ayant requis l'impression du document à imprimer via le client d'impression peut obtenir ultérieurement les tronçons du document à imprimer et ordonner l'impression effective.

L'invention concerne également une imprimante disposant de capacités de stockage, dite imprimante maître, destinée à être connectée à un réseau de communication comportant un client d'impression et une pluralité d'imprimantes, dont au moins deux sont des imprimantes maîtres. Ladite imprimante maître comprend :
- des moyens pour recevoir, en provenance du client d'impression, au moins un tronçon de document, ledit ou lesdits tronçon(s) résultant d'une découpe d'un document à imprimer ;
- des moyens pour fournir à une imprimante, en réponse à une requête de ladite imprimante, au moins un tronçon parmi le ou les tronçon(s) reçu(s).

Selon un mode de réalisation particulier, l'imprimante maître comprend en outre des moyens pour recevoir du client d'impression, et des moyens pour transmettre à une imprimante, une information de correspondance entre chacun des tronçons dudit document à imprimer et chaque imprimante maître à laquelle ledit tronçon est transmis par le client d'impression.

Selon un mode de réalisation particulier, ladite requête comprend un code de sécurité, l'imprimante maître comprend en outre des moyens pour effectuer une comparaison entre le code de sécurité compris dans ladite requête et un code de sécurité fourni par le client d'impression, et les moyens pour fournir au moins un tronçon sont activés si la comparaison est réussie.

L'invention concerne également une imprimante destinée à être connectée à un réseau de communication comportant en outre un client d'impression et au moins une autre imprimante, au moins deux imprimantes dudit réseau étant des imprimantes, dites maîtres, disposant de capacités de stockage. Ladite imprimante comprend :
- des moyens pour requérir auprès d'au moins une imprimante maître des tronçons de document correspondant au document à imprimer ;
- des moyens pour recevoir les tronçons de document requis ;
- des moyens pour reconstituer le document à imprimer au moins à partir des tronçons de document reçus ;
- des moyens pour lancer une impression du document à imprimer reconstitué.

Selon un mode de réalisation particulier, l'imprimante comprend en outre des moyens pour obtenir, auprès d'au moins une desdites imprimantes maîtres, une information de correspondance entre chacun des tronçons dudit document à imprimer et chaque imprimante maître à laquelle ledit tronçon a été transmis par le client d'impression.

Ainsi, en cas de défaillance d'une imprimante maître, une imprimante maître de remplacement peut être sélectionnée.

Selon un mode de réalisation particulier, l'imprimante comprend en outre des moyens pour obtenir, auprès d'au moins une desdites imprimantes maîtres, une information de correspondance entre chacun des tronçons dudit document à imprimer et chaque imprimante maître à laquelle ledit tronçon a été transmis par le client d'impression.

Selon un mode de réalisation particulier, l'imprimante comprend en outre des moyens pour obtenir un code de sécurité permettant un accès aux tronçons sur les imprimantes maîtres auxquelles lesdits tronçons ont été transmis.

Ainsi, seul un utilisateur ayant requis l'impression du document à imprimer via le client d'impression obtient les tronçons du document à imprimer et peut ordonner l'impression effective du document.

L'invention concerne également un procédé mis en oeuvre par un client d'impression dans un réseau de communication comportant en outre une pluralité d'imprimantes dont au moins deux sont des imprimantes, dites maîtres, disposant de capacités de stockage. Le procédé comprend des étapes de :
- découpe d'un document à imprimer en une pluralité de tronçons de document;
- transmission de chaque tronçon à au moins une imprimante maître, les tronçons étant répartis sur lesdites imprimantes maîtres.

L'invention concerne également un procédé mis en oeuvre par une imprimante maître dans un réseau de communication comportant un client d'impression et une pluralité d'imprimantes dont au moins deux sont des imprimantes, dites maîtres, disposant de capacités de stockage. Le procédé comprend des étapes de:
- réception, en provenance du client d'impression, d'au moins un tronçon de document, ledit ou lesdits tronçon(s) résultant d'une découpe d'un document à imprimer ;
- fourniture à une imprimante, en réponse à une requête de ladite imprimante, d'au moins un tronçon de document parmi le ou les tronçon(s) reçu(s).

L'invention concerne également un procédé mis en oeuvre par une imprimante appartenant à un réseau de communication comportant en outre un client d'impression et au moins une autre imprimante, au moins deux imprimantes dudit réseau étant des imprimantes, dites maîtres, disposant de capacités de stockage. Le procédé comprend des étapes de :
- requête auprès d'au moins une imprimante maître d'au moins un tronçon de document correspondant au document à imprimer ;
- réception du ou des tronçon(s) requis ;
- reconstitution du document à imprimer au moins à partir du ou des tronçon(s) reçu(s) ;
- lancement d'une impression du document à imprimer reconstitué. L'invention concerne également un système d'impression destiné à être connecté à un réseau de communication, le système d'impression comportant un client d'impression et une pluralité d'imprimantes dont au moins deux sont des imprimantes, dites maîtres, disposant de capacités de stockage. Le système d'impression est tel que le client d'impression comprend :
- des moyens pour découper un document à imprimer en une pluralité de tronçons de document;
- des moyens pour transmettre chaque tronçon à au moins une imprimante maître, les tronçons étant répartis sur lesdites imprimantes maîtres.

Le système d'impression est en outre tel que chaque imprimante maître comprend :
- des moyens pour recevoir, en provenance du client d'impression, au moins un desdits tronçons ;
- des moyens pour fournir à une imprimante, en réponse à une requête de ladite imprimante, au moins un tronçon de document parmi le ou les tronçon(s) reçu(s).

Le système d'impression est en outre tel qu'au moins une imprimante comprend :
- des moyens pour requérir auprès d'au moins une imprimante maître au moins un tronçon de document correspondant au document à imprimer ;
- des moyens pour recevoir le ou les tronçon(s) requis ;
- des moyens pour reconstituer le document à imprimer au moins à partir du ou des tronçon(s) reçu(s) ;
- des moyens pour lancer une impression du document à imprimer reconstitué.

L'invention concerne également un procédé mis en oeuvre dans un réseau de communication comportant un client d'impression et une pluralité d'imprimantes dont au moins deux sont des imprimantes, dites maîtres, disposant de capacités de stockage. Le procédé est tel que le client d'impression effectue des étapes de :
- découpe d'un document à imprimer en une pluralité de tronçons de document ;
- transmission de chaque tronçon à au moins une imprimante maître, les tronçons étant répartis sur lesdites imprimantes maîtres.

Le procédé est en outre tel que chaque imprimante maître effectue des étapes de:
- réception, en provenance du client d'impression, d'au moins un tronçon de document ;
- fourniture à une imprimante, en réponse à une requête de ladite imprimante, d'au moins un tronçon parmi le ou les tronçon(s) reçu(s).

Le procédé est en outre tel qu'au moins une imprimante effectue des étapes de :
- requête auprès d'au moins une imprimante maître d'au moins un tronçon de document correspondant au document à imprimer ;
- réception du ou des tronçon(s) requis ;
- reconstitution du document à imprimer au moins à partir du ou des tronçon(s) reçu(s) ;
- lancement d'une impression du document à imprimer reconstitué.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter l'un des procédés mentionnés ci-dessus, lorsque ledit programme est exécuté par un système informatique ou un processeur. Selon un autre aspect, dans au moins un mode de réalisation, l'invention concerne un moyen de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre un exemple de réseau de communication comprenant un système d'impression selon une réalisation de l'invention ;
- la Fig. 2 illustre un exemple de dispositif de communication tel que présent dans le réseau de communication de la Fig. 1 ;
- la Fig. 3 illustre un algorithme mis en oeuvre par un client d'impression dans le réseau de communication de la Fig. 1 ;
- la Fig. 4 illustre le résultat d'une découpe en tronçons d'un document à imprimer, telle que mise en oeuvre par un client d'impression dans le réseau de communication de la Fig. 1 ;
- la Fig. 5 illustre un algorithme mis en oeuvre par une imprimante du réseau de communication de la Fig. 1 ;
- la Fig. 6 illustre un algorithme mis en oeuvre par une imprimante maître dans le réseau de communication de la Fig. 1.

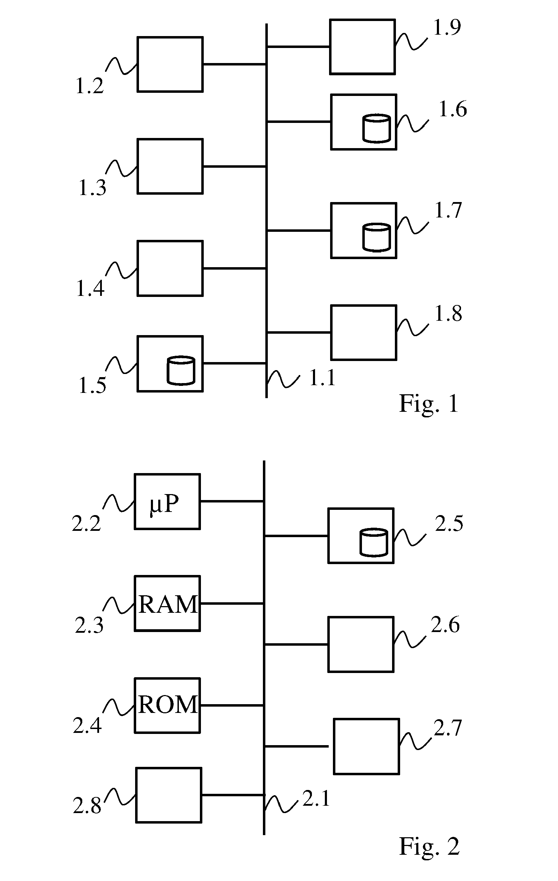

La Fig. 1 illustre un exemple de réseau comprenant un système d'impression dans lequel l'invention peut être mise en oeuvre. Différents dispositifs de communication communiquent à l'aide d'un réseau de communication 1.1, typiquement un réseau local LAN (Local Area Network en anglais). Ce réseau peut fonctionner selon tout type de technologie filaire, par exemple Ethernet, ou sans fil, par exemple WiFi. Connectés à ce réseau se trouvent différents dispositifs de communication et notamment des postes 1.2, 1.3 et 1.4 comprenant des clients d'impression, susceptibles de lancer des commandes d'impression de documents, et des imprimantes 1.5, 1.6, 1.7 et 1.8. Les postes 1.2, 1.3 et 1.4 sont typiquement des postes informatiques, ordinateurs de bureau, ordinateurs portables ou encore tout dispositif de traitement de l'information disposant de capacités de communication réseau. Par la suite, on assimile les clients d'impression aux postes 1.2, 1.3, 1.4 dans lesquels ils sont compris. Les imprimantes 1.5, 1.6, 1.7 et 1.8 peuvent recevoir des commandes d'impression et imprimer des documents correspondants. Certaines de ces imprimantes sont dotées de capacités de stockage propres, comme les imprimantes 1.5, 1.6 et 1.7 représentées avec un disque dur interne ; tandis que d'autres imprimantes, comme l'imprimante 1.8, en sont dépourvues. Les imprimantes qui disposent de capacités de stockage propres peuvent implémenter un système local de file d'attente d'impression dans lequel des documents à imprimer sont stockés à l'aide des capacités de stockage propres à l'imprimante. Sinon, la file d'attente d'impression est typiquement gérée par un serveur d'impression externe 1.9, servant de relais entre le client d'impression et l'imprimante.

Le système d'impression dans lequel l'invention peut être mise en oeuvre comprend ainsi un client d'impression, à partir duquel l'utilisateur va ordonner l'impression d'un document, dit document à imprimer, au moins deux - et préférentiellement plus de deux - imprimantes maîtres sur lesquelles un document à imprimer va être réparti, voire dupliqué, par tronçons (chunks en anglais) ou parties, et une imprimante par laquelle, grâce à un code de sécurité, un utilisateur va pouvoir obtenir l'impression effective du document.

La Fig. 2 illustre un exemple de dispositif de communication du réseau de communication 1.1, tel qu'une imprimante 1.5, 1.6, 1.7 ou 1.8 ou un poste 1.2, 1.3 ou 1.4 comprenant un client d'impression. Un tel dispositif de communication comprend, reliés par un bus de communication 2.1 :
- un processeur, micro-processeur (noté µP), microcontrôleur ou CPU (Central Processing Unit en anglais ou Unité Centrale de Traitement en français) 2.2 ;
- une mémoire vive RAM (Random Access Memory en anglais ou Mémoire à Accès Aléatoire en français) 2.3 ;
- une mémoire morte ROM (Read Only Memory en anglais ou Mémoire à Lecture Seule en français) 2.4 ;
- une interface de communication 2.6 avec le réseau de communication 1.1 ;
- une interface 2.7 vers des fonctions additionnelles ;
- éventuellement, une unité de stockage 2.5 ; et
- éventuellement, un lecteur 2.8 de support de stockage, tel qu'un lecteur de CD-ROM (pour Compact Disk Read Only Memory en anglais ou Disque Compact Mémoire à Lecture Seule en français).

L'interface 2.7 permet l'accès à des fonctions additionnelles, dépendantes du dispositif de communication considéré, comme par exemple une fonction d'interface homme machine, une fonction de contrôle des mécanismes d'impression,...

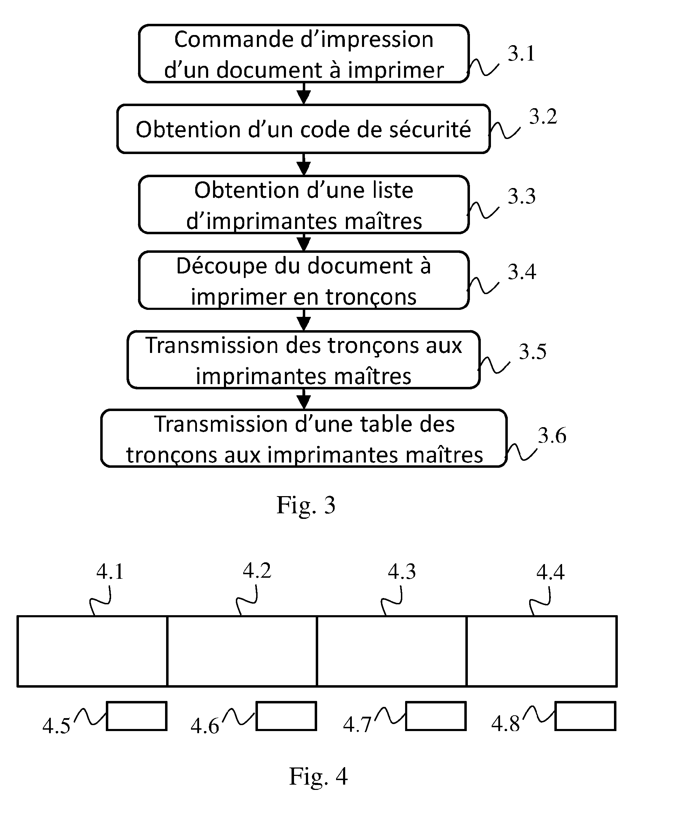

Le processeur 2.2 est capable d'exécuter des instructions chargées dans la RAM 2.3 à partir de la ROM 2.4, d'une mémoire externe (non représentée), d'un support de stockage, tel qu'un disque dur ou un CD-ROM, ou d'un réseau de communication. Lorsque le dispositif de communication est mis sous tension, le processeur 2.2 est capable de lire de la RAM 2.3 des instructions et de les exécuter. Ces instructions forment au moins un programme d'ordinateur. Ce(s) programme(s) d'ordinateur cause(nt) la mise en oeuvre, par le processeur 2.2, de tout ou partie des algorithmes décrits ci-après en relation avec les Figs. 3, 5 et 6.

Tout ou partie des algorithmes décrits ci-après en relation avec les Figs. 3, 5 et 6 peut être implémenté(e) sous forme logicielle par exécution d'un ensemble d'instructions par une machine programmable, tel qu'un DSP (Digital Signal Processor en anglais ou Unité de Traitement de Signal Numérique en français) ou un microcontrôleur, ou être implémenté sous forme matérielle par une machine ou un composant dédié, tel qu'un FPGA (Field-Programmable Gate Array en anglais ou Matrice de Portes Programmable sur Champ en français) ou un ASIC (Application-Specific Integrated Circuit en anglais ou Circuit Intégré Spécifique à une Application en français).

La Fig. 3 illustre un algorithme mis en oeuvre par un client d'impression pour effectuer l'impression d'un document, dans un mode de réalisation de l'invention.

Lors d'une étape 3.1, un ordre d'impression du document parvient au client d'impression. Ce document peut être un document PDL (Page Description Language en anglais) de format générique. Ceci permet de ne déterminer une imprimante, par laquelle est effectivement effectuée l'impression du document, qu'au dernier moment. Ce format est générique dans le sens qu'il n'est pas spécifique d'un type d'imprimante particulier et que le document qui porte ce format est susceptible d'être imprimé par n'importe quelle imprimante 1.5, 1.6, 1.7 ou 1.8 du réseau de communication 1.1, même si elles sont de types différents. Le document à imprimer peut en outre être associé à des paramètres d'impression, tels que l'échelle, la mise en page - portrait ou paysage -, l'utilisation de la couleur ou autres.

Lors d'une étape 3.2 suivante, un utilisateur saisit alors un code de sécurité, tel un code PIN (Personal Identification Number en anglais ou Numéro Personnel *d'Identification* en français), permettant de sécuriser l'impression effective du document. Dans une variante de réalisation, un tel code de sécurité peut être fourni, par exemple pseudo-aléatoirement, par le client d'impression.

Lorsque le document est transmis par tronçons, ce code de sécurité est transmis aux imprimantes maîtres en correspondance avec les tronçons du document à imprimer, et est utilisé ultérieurement par l'utilisateur lorsque celui-ci se rend à l'imprimante par laquelle il souhaite faire effectivement imprimer le document considéré.

Lors d'une étape 3.3 suivante, le client d'impression obtient une liste des imprimantes maîtres du réseau de communication 1.1. Ces imprimantes maîtres disposent de capacités de stockage 2.5 et sont donc par exemple les imprimantes 1.5, 1.6 et 1.7. D'une manière générale, lorsque l'utilisateur souhaite ordonner une impression de document à partir d'un poste client 1.2, 1.3 ou 1.4, il sélectionne une imprimante parmi une liste d'imprimantes disponibles sur le réseau de communication 1.1. Dans un mode de réalisation préféré, ces imprimantes maîtres ne sont pas dévoilées à l'utilisateur et cette information reste interne au client d'impression. Dans ce cas, l'utilisateur ne dispose que d'un bouton de commande d'impression générique, en ce sens qu'il ne permet pas de sélectionner, à partir du client d'impression, une imprimante par laquelle le document doit être imprimé.

Les imprimantes maîtres peuvent être désignées manuellement lors d'une configuration par un administrateur ou encore être désignées lors d'un processus de découverte sur le réseau de communication 1.1. Il est par exemple possible d'utiliser la norme UPnP (Universal Plug and Play en anglais) telle que définie dans le document ISO/IEC 29341-1:2008. De cette norme, il est par exemple possible d'utiliser le protocole SSDP (Simple Service Discovery Protocol en anglais) pour découvrir des services disponibles sur le réseau de communication 1.1, ainsi que le service FollowMe (service d'impression optionnel UPnP). Le client d'impression est alors un poste de contrôle UPnP (UPnP Control Point en anglais) disposant d'une version client du service FollowMe. Les imprimantes annoncent le support du service FollowMe aux autres dispositifs de communication par le biais du protocole SSDP en utilisant un message Notify et peuvent ainsi indiquer leur éventuel statut d'imprimante maître. Les dispositifs de communication du réseau de communication 1.1 peuvent ainsi connaître l'adresse IP (Internet Protocol en anglais) des imprimantes maîtres.

Lors d'une étape 3.4 suivante, le client d'impression découpe le document à imprimer en une pluralité de tronçons. De manière préférentielle, chaque tronçon du document à imprimer est de taille fixe, et des données de bourrage (padding data en anglais) peuvent être insérées pour compléter un tronçon. Un exemple de réalisation d'une telle découpe est présenté sur la Fig. 4. Un document au format PDL de 480 kilo-octets est découpé en 4 tronçons. Un premier tronçon 4.1 comprend les 128 premiers kilo-octets du document au format PDL, un second tronçon 4.2 comprend les 128 kilo-octets suivants, un troisième tronçon 4.3 comprend les 128 kilo-octets suivants et un quatrième tronçon 4.4 comprend les 96 kilo-octets de fin et 32 kilo-octets de données de bourrage. Chaque tronçon est identifié de manière unique par un identifiant : le tronçon 4.1 est identifié par l'identifiant 4.5, le tronçon 4.2 est identifié par l'identifiant 4.6, le tronçon 4.3 est identifié par l'identifiant 4.7 et le tronçon 4.4 est identifié par l'identifiant 4.8. L'identifiant associé à un tronçon est transmis avec ce tronçon, afin que l'imprimante par laquelle le document doit être imprimé puisse ultérieurement reconstituer le document à imprimer. Dans une variante de réalisation, les tronçons sont découpés de sorte qu'aucune donnée de bourrage n'est insérée.

Lors d'une étape 3.5 suivante, le client d'impression transmet les tronçons aux imprimantes maîtres 1.5, 1.6, 1.7, dont la liste a été obtenue lors de l'étape 3.3, de manière à répartir les tronçons sur les imprimantes maîtres 1.5, 1.6, 1.7. Chaque tronçon obtenu lors de l'étape 3.4 doit être transmis pour stockage à au moins une des imprimantes maîtres 1.5, 1.6, 1.7. Ainsi, l'utilisation des ressources de stockage est répartie, pas nécessairement de manière uniforme, sur les imprimantes maîtres 1.5, 1.6, 1.7. Un même tronçon est avantageusement stocké sur plusieurs imprimantes maîtres 1.5, 1.6, 1.7. Ainsi, une imprimante maître peut remplacer, pour la fourniture d'au moins un tronçon à l'imprimante par laquelle le document doit être imprimé, une autre imprimante maître défaillante. Le nombre de copies de chaque tronçon devant être transmises à des imprimantes maîtres est configurable. Plus ce nombre diminue et plus l'occupation des ressources mémoires des imprimantes maîtres 1.5, 1.6, 1.7 est optimisée.

Au moins deux imprimantes maîtres sont nécessaires pour mettre en oeuvre l'invention. Plus ce nombre augmente et plus la possibilité de pallier une défaillance d'au moins l'une des imprimantes maîtres 1.5, 1.6, 1.7 augmente. Les transmissions de tronçons peuvent avantageusement s'effectuer en parallèle afin de réduire le temps de transmission de l'ensemble de ces tronçons vers les imprimantes maîtres. De la même manière, ces tronçons peuvent être récupérés en parallèle par l'imprimante par laquelle le document doit être imprimé, afin de réduire le temps de transmission de tous ces tronçons vers l'imprimante par laquelle le document doit être imprimé.

Dans un mode de réalisation préférentiel, chaque tronçon est copié deux fois, c'est-à-dire qu'il est transmis pour stockage à deux imprimantes maîtres, et le réseau de communication 1.1 comprend au moins trois imprimantes maîtres. Le document est par exemple découpé en quatre tronçons 4.1, 4.2, 4.3 et 4.4 tel que représenté sur la Fig. 4 déjà décrite. Par exemple, le tronçon 4.1 est transmis pour stockage à l'imprimante 1.5 et à l'imprimante 1.6, le tronçon 4.2 est transmis pour stockage à l'imprimante 1.6 et à l'imprimante 1.7, le tronçon 4.3 est transmis pour stockage à l'imprimante 1.5 et à l'imprimante 1.7 et le tronçon 4.4 est transmis pour stockage à l'imprimante 1.5 et à l'imprimante 1.6. De cette manière les tronçons sont transmis de manière dupliquée sur des imprimantes maîtres sélectionnées, pour chacun des tronçons, selon une séquence prédéfinie. Si l'une des imprimantes maîtres n'est plus présente dans le réseau de communication 1.1, cette étape 3.5 doit être réitérée, pour les tronçons impactés par cette absence d'imprimante maître, en prenant en compte les imprimantes maîtres restantes pour répartir et dupliquer les tronçons.

Afin d'éviter que chaque imprimante maître 1.5, 1.6, 1.7 ne considère les différents tronçons d'un même document à imprimer comme correspondant à des travaux d'impression distincts, le client d'impression peut requérir, de la part de l'imprimante maître considérée, l'attribution d'un identifiant de travail d'impression JobId. Cet identifiant JobId est alors communiqué avec chaque tronçon suivant transmis à l'imprimante maître considérée. Les valeurs des identifiants JobId de travaux d'impression associés à un même document peuvent être différentes d'une imprimante maître à l'autre. Une imprimante alloue, de manière indépendante des autres imprimantes du réseau de communication 1.1, des identifiants pour les travaux d'impression dont elle a la charge. Ces identifiants JobId n'ont donc qu'une portée locale à l'imprimante maître considérée, afin qu'elle puisse regrouper les tronçons d'un même document à imprimer.

Lors d'une étape 3.6 suivante, le client d'impression transmet, à chaque imprimante maître, une information de correspondance entre chacun des tronçons et toute imprimante maître à laquelle ledit tronçon a été transmis. Cette information est appelée, par la suite, table de tronçons. Il est alors mis fin à l'algorithme.

Une fois ordonné le travail d'impression du document à imprimer, l'utilisateur se dirige vers l'imprimante 1.5, 1.6, 1.7 ou 1.8 de son choix. Par exemple, l'imprimante par laquelle le document doit être imprimé est l'imprimante 1.8.

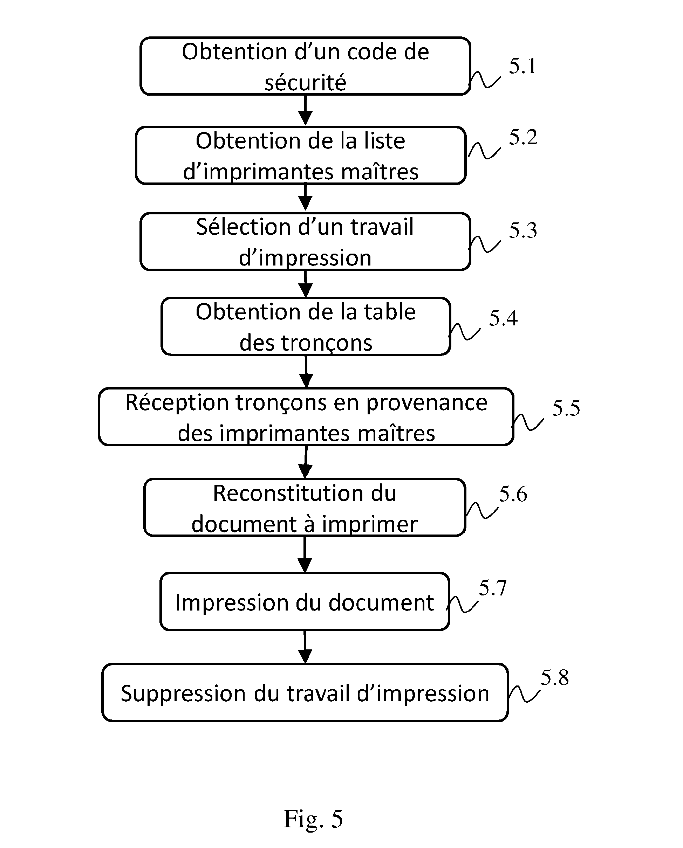

La Fig. 5 illustre un algorithme mis en oeuvre par une imprimante auprès de laquelle se rend l'utilisateur pour obtenir le document imprimé.

Lors d'une étape 5.1, l'utilisateur saisit un code de sécurité, tel un code PIN, sur le pupitre de contrôle de l'imprimante par laquelle le document doit être imprimé. Pour accéder au travail d'impression relatif au document à imprimer, l'utilisateur doit saisir le code de sécurité qu'il a saisi ou obtenu à l'étape 3.2 lors de l'interaction avec le client d'impression.

Lors d'une étape 5.2 suivante, l'imprimante par laquelle le document doit être imprimé obtient la liste des imprimantes maîtres 1.5, 1.6, 1.7 du réseau de communication 1.1, de la même manière que le client d'impression lors de l'étape 3.3.

Lors d'une étape 5.3 suivante, l'imprimante par laquelle le document doit être imprimé sélectionne au moins une imprimante maître et obtient de cette ou ces imprimante(s) maître(s) une indication d'un travail d'impression en attente correspondant au code de sécurité saisi par l'utilisateur. L'utilisateur peut alors sélectionner le document à imprimer sur le pupitre de contrôle de l'imprimante par laquelle le document doit être imprimé. Selon une réalisation de l'invention, les échanges entre les imprimantes maîtres et l'imprimante par laquelle le document doit être imprimé sont implémentés sous la forme d'action du service UPnP FollowMe déclenché par le protocole de procédure à distance SOAP (Simple Object Access Protocol en anglais).

Lors d'une étape 5.4 suivante, l'imprimante par laquelle le document doit être imprimé sélectionne au moins une imprimante maître et obtient de cette ou ces imprimante(s) maître(s) la table des tronçons transmise par le client d'impression lors de l'étape 3.6. L'imprimante par laquelle le document doit être imprimé identifie dans cette table les différents tronçons constituant le document à imprimer et leur localisation parmi les imprimantes maîtres 1.5, 1.6, 1.7.

Lors d'une étape 5.5 suivante, l'imprimante par laquelle le document doit être imprimé requiert des imprimantes maîtres, et reçoit de ces imprimantes maîtres, les tronçons identifiés dans la table des tronçons. Quand un tronçon est disponible sur plusieurs imprimantes maîtres, l'imprimante par laquelle le document doit être imprimé sélectionne une de ces imprimantes maîtres comme fournisseur du tronçon. Si l'une des imprimantes maîtres est déconnectée du réseau de communication 1.1, l'imprimante par laquelle le document doit être imprimé sélectionne une imprimante maître de remplacement où le ou les tronçon(s) à obtenir sont aussi disponibles. Il en va de même en cas d'expiration de temporisation de retransmission définie par le protocole de transport utilisé entre l'imprimante par laquelle le document doit être imprimé et les imprimantes maîtres (comme le protocole TCP/IP (Transmission Control Protocol / Internet Protocol en anglais, défini par les RFC 791 et 793)).

L'imprimante par laquelle le document à imprimer doit être imprimé peut transmettre, à chaque requête pour obtenir un tronçon du document à imprimer, le code de sécurité saisi par l'utilisateur à l'étape 5.1. Ce code est comparé, par l'imprimante maître recevant la requête, avec un code de sécurité fourni par le client d'impression en correspondance avec le tronçon requis, et l'imprimante maître fournit le tronçon requis en cas de comparaison réussie.

Il est à noter que l'imprimante par laquelle le document doit être imprimé peut aussi être une imprimante maître utilisée pour le stockage de tronçons d'un document à imprimer. Dans ce cas, l'imprimante par laquelle le document doit être imprimé dispose localement de la table des tronçons et d'au moins un de ces tronçons. Il lui est alors simplement nécessaire de récupérer auprès des autres imprimantes maîtres le ou les tronçon(s) dont elle ne dispose pas encore.

Lors d'une étape 5.6 suivante, l'imprimante par laquelle le document doit être imprimé reconstitue le document à imprimer à partir des tronçons obtenus lors de l'étape 3.4, grâce aux identifiants de tronçon.

Lors d'une étape 5.7 suivante, une fois le document à imprimer reconstitué, l'imprimante par laquelle le document doit être imprimé peut lancer l'impression effective du document.

Lors d'une étape 5.8 suivante, le travail d'impression est supprimé de la liste des travaux d'impression en attente. Cela peut par exemple prendre la forme d'un message d'annulation du travail d'impression à destination des imprimantes maîtres 1.5, 1.6, 1.7. Il est alors mis fin à l'algorithme.

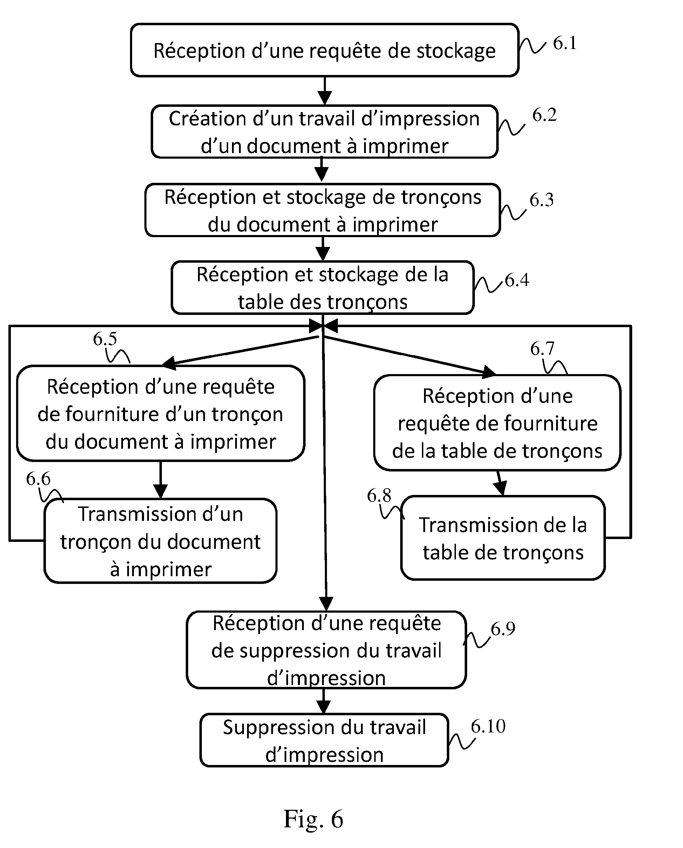

La Fig. 6 illustre un algorithme mis en oeuvre par une imprimante maître dans le cadre d'une impression d'un document.

Lors d'une étape 6.1, l'imprimante maître reçoit une requête, en provenance du client d'impression, relative au stockage d'un document à imprimer. Elle reçoit aussi des informations associées, tel qu'un code de sécurité pour l'accès ultérieur aux données de ce document à imprimer. Une réception d'un premier tronçon du document à imprimer peut être comprise comme une telle requête.

Lors d'une étape 6.2 suivante, l'imprimante maître considérée crée un travail d'impression relatif au document à imprimer.

Lors d'une étape 6.3 suivante, l'imprimante maître considérée reçoit, en provenance du client d'impression, au moins un tronçon du document à imprimer et le stocke. Chaque tronçon est reçu accompagné d'un identifiant de tronçon.

Lors d'une étape 6.4 suivante, l'imprimante maître considérée reçoit, en provenance du client d'impression, une table de tronçons, indiquant sur quelle(s) imprimante(s) maître(s) est stocké chacun des tronçons du document à imprimer, et la stocke. L'imprimante maître considérée se met ensuite en attente d'une requête.

Si l'imprimante maître considérée reçoit en provenance d'une imprimante une requête visant à obtenir une indication d'un travail d'impression en attente associé à un code de sécurité, l'imprimante maître compare le code de sécurité fourni dans la requête avec le code de sécurité du travail d'impression créé à l'étape 6.2. Si la comparaison réussit, l'imprimante maître considérée envoie à l'imprimante requérante une indication du travail d'impression créé à l'étape 6.2.

Si l'imprimante maître considérée reçoit en provenance d'une imprimante une requête de fourniture de la table des tronçons, une étape 6.7 est exécutée ; si l'imprimante maître considérée reçoit en provenance de l'imprimante requérante une requête de fourniture d'au moins un tronçon du document à imprimer, une étape 6.5 est exécutée ; et, si l'imprimante maître considérée reçoit une requête de suppression du travail d'impression, une étape 6.9 est exécutée.

Lors de l'étape 6.7, l'imprimante maître considérée reçoit en provenance d'une imprimante une requête de fourniture de la table des tronçons. Après avoir vérifié les identifiants et le code de sécurité contenus dans la requête, lors d'une étape 6.8, l'imprimante maître considérée transmet à l'imprimante requérante la table des tronçons associée au document à imprimer. L'imprimante maître considérée se met ensuite à nouveau en attente d'une requête.

Lors de l'étape 6.5, l'imprimante maître considérée reçoit en provenance d'une imprimante une requête de fourniture d'au moins un tronçon du document à imprimer, chaque tronçon étant identifié par un identifiant de tronçon. Après avoir vérifié les identifiants et le code de sécurité contenus dans la requête, lors d'une étape 6.8, l'imprimante maître considérée transmet à l'imprimante requérante le ou les tronçons requis. L'imprimante maître considérée se met ensuite à nouveau en attente d'une requête.

Lors de l'étape 6.9, l'imprimante maître considérée reçoit une requête de suppression du travail d'impression et après avoir vérifié les identifiants et le code de sécurité contenus dans la requête, lors d'une étape 6.10, l'imprimante maître considérée supprime le travail d'impression créé à l'étape 6.2. Il est alors mis fin à l'algorithme.

## Revendications

1. Client d'impression (1.2;1.3;1.4) destiné à être utilisé dans un réseau de communication (1.1) comportant en outre une pluralité d'imprimantes (1.5;1.6;1.7;1.8) dont au moins deux sont des imprimantes, dites maîtres (1.5;1.6;1.7), disposant de capacités de stockage, le client d'impression comprenant :
- des moyens pour découper un document à imprimer en une pluralité de tronçons (4.1;4.2;4.3;4.4) de document ;
- des moyens pour transmettre chaque tronçon à au moins une imprimante maître, les tronçons étant répartis sur lesdites imprimantes maîtres ;
**caractérisé en ce qu'**il comporte en outre :
- des moyens pour transmettre auxdites imprimantes maîtres une information de correspondance entre chacun desdits tronçons et chaque imprimante maître à laquelle ledit tronçon est transmis.

2. Client d'impression selon la revendication 1, **caractérisé en ce qu'**il comprend en outre des moyens pour obtenir un code de sécurité permettant un accès ultérieur aux tronçons sur les imprimantes maîtres auxquelles lesdits tronçons sont transmis.

3. Imprimante disposant de capacités de stockage, dite imprimante maître (1.5;1.6;1.7), destinée à être connectée à un réseau de communication (1.1) comportant un client d'impression (1.2;1.3;1.4) et une pluralité d'imprimantes (1.5;1.6;1.7;1.8), dont au moins deux sont des imprimantes maîtres (1.5;1.6;1.7), ladite imprimante maître comprenant :
- des moyens pour recevoir, en provenance du client d'impression, au moins un tronçon de document, ledit ou lesdits tronçon(s) résultant d'une découpe d'un document à imprimer ;
**caractérisée en ce que** ladite imprimante maître comprend en outre :
- des moyens pour fournir à une imprimante, en réponse à une requête de ladite imprimante, au moins un tronçon parmi le ou les tronçon(s) reçu(s).

4. Imprimante selon la revendication 3, **caractérisée en ce qu'**elle comprend en outre des moyens pour recevoir du client d'impression, et des moyens pour transmettre à une imprimante, une information de correspondance entre chacun des tronçons dudit document à imprimer et chaque imprimante maître à laquelle ledit tronçon est transmis par le client d'impression.

5. Imprimante selon l'une quelconque des revendications 3 et 4, **caractérisée en ce que** ladite requête comprend un code de sécurité et **en ce que** l'imprimante maître comprend en outre des moyens pour effectuer une comparaison entre le code de sécurité compris dans ladite requête et un code de sécurité fourni par le client d'impression, et **en ce que** les moyens pour fournir au moins un tronçon sont activés si la comparaison est réussie.

6. Imprimante (1.5;1.6;1.7;1.8) destinée à être connectée à un réseau de communication (1.1) comportant en outre un client d'impression (1.2;1.3;1.4) et au moins une autre imprimante (1.5;1.6;1.7), au moins deux imprimantes dudit réseau étant des imprimantes, dites maîtres (1.5;1.6;1.7), disposant de capacités de stockage, ladite imprimante comprenant :
- des moyens pour requérir auprès d'au moins une imprimante maître des tronçons de document correspondant au document à imprimer ;
- des moyens pour recevoir les tronçons de document requis ;
- des moyens pour reconstituer le document à imprimer au moins à partir des tronçons de document reçus ;
- des moyens pour lancer une impression du document à imprimer reconstitué ;
**caractérisé en ce qu'**elle comprend en outre des moyens pour obtenir, auprès d'au moins une desdites imprimantes maîtres, une information de correspondance entre chacun des tronçons dudit document à imprimer et chaque imprimante maître à laquelle ledit tronçon a été transmis par le client d'impression.

7. Imprimante selon la revendication 6, **caractérisé en ce que** les moyens pour requérir des tronçons comprennent des moyens pour sélectionner, pour chaque tronçon du document à imprimer, une imprimante maître parmi une pluralité d'imprimantes maîtres sur lesquelles est stocké ledit tronçon.

8. Imprimante selon l'une quelconque des revendications 6 et 7, **caractérisé en ce qu'**elle comprend en outre des moyens pour obtenir un code de sécurité permettant un accès aux tronçons sur les imprimantes maîtres auxquelles lesdits tronçons ont été transmis.

9. Procédé mis en oeuvre par un client d'impression (1.2;1.3;1.4) dans un réseau de communication (1.1) comportant en outre une pluralité d'imprimantes (1.5;1.6;1.7;1.8) dont au moins deux sont des imprimantes, dites maîtres (1.5;1.6;1.7), disposant de capacités de stockage, le procédé comprenant des étapes de :
- découpe (3.4) d'un document à imprimer en une pluralité de tronçons de document;
- transmission (3.5) de chaque tronçon à au moins une imprimante maître, les tronçons étant répartis sur lesdites imprimantes maîtres.
**caractérisé en ce qu'**il comporte en outre une étape de transmission auxdites imprimantes maîtres d'une information de correspondance entre chacun desdits tronçons et chaque imprimante maître à laquelle ledit tronçon est transmis.

10. Procédé mis en oeuvre par une imprimante maître (1.5;1.6;1.7) dans un réseau de communication (1.1) comportant un client d'impression (1.2;1.3;1.4) et une pluralité d'imprimantes dont au moins deux sont des imprimantes, dites maîtres (1.5;1.6;1.7), disposant de capacités de stockage, le procédé comprenant une étape de :
- réception (6.3), en provenance du client d'impression, d'au moins un tronçon de document, ledit ou lesdits tronçon(s) résultant d'une découpe d'un document à imprimer ;
**caractérisé en ce qu'**il comprend en outre une étape de :
- fourniture (6.6) à une imprimante, en réponse à une requête de ladite imprimante, d'au moins un tronçon de document parmi le ou les tronçon(s) reçu(s).

11. Procédé mis en oeuvre par une imprimante (1.5;1.6;1.7;1.8) appartenant à un réseau de communication (1.1) comportant en outre un client d'impression (1.2;1.3;1.4) et au moins une autre imprimante, au moins deux imprimantes dudit réseau étant des imprimantes (1.5;1.6;1.7), dites maîtres, disposant de capacités de stockage, le procédé comprenant des étapes de :
- requête auprès d'au moins une imprimante maître d'au moins un tronçon de document correspondant au document à imprimer ;
- réception (5.5) du ou des tronçon(s) requis ;
- reconstitution (5.6) du document à imprimer au moins à partir du ou des tronçon(s) reçu(s) ;
- lancement d'une impression (5.8) du document à imprimer reconstitué ; **caractérisé en ce qu'**il comprend une étape préalable de :
- obtention, auprès d'au moins une desdites imprimantes maîtres, d'une information de correspondance entre chacun des tronçons dudit document à imprimer et chaque imprimante maître à laquelle ledit tronçon a été transmis par le client d'impression.

12. Système d'impression destiné à être connecté à un réseau de communication (1.1), le système d'impression comportant un client d'impression et une pluralité d'imprimantes (1.5;1.6;1.7;1.8) dont au moins deux sont des imprimantes, dites maîtres (1.5;1.6;1.7), disposant de capacités de stockage, le client d'impression comprenant :
- des moyens pour découper un document à imprimer en une pluralité de tronçons (4.1;4.2;4.3;4.4) de document;
- des moyens pour transmettre chaque tronçon à au moins une imprimante maître, les tronçons étant répartis sur lesdites imprimantes maîtres ;
**caractérisé en ce que** chaque imprimante maître comprend :
- des moyens pour recevoir, en provenance du client d'impression, au moins un desdits tronçons ;
- des moyens pour fournir à une imprimante, en réponse à une requête de ladite imprimante, au moins un tronçon de document parmi le ou les tronçon(s) reçu(s) ;
et **en ce que** au moins une imprimante comprend :
- des moyens pour requérir auprès d'au moins une imprimante maître au moins un tronçon de document correspondant au document à imprimer ;
- des moyens pour recevoir le ou les tronçon(s) requis ;
- des moyens pour reconstituer le document à imprimer au moins à partir du ou des tronçon(s) reçu(s) ;
- des moyens pour lancer une impression du document à imprimer reconstitué.

13. Procédé mis en oeuvre dans un réseau de communication (1.1) comportant un client d'impression et une pluralité d'imprimantes (1.5;1.6;1.7;1.8) dont au moins deux sont des imprimantes, dites maîtres (1.5;1.6;1.7), disposant de capacités de stockage, le client d'impression effectuant des étapes de :
- découpe (3.4) d'un document à imprimer en une pluralité de tronçons de document ;
- transmission (3.5) de chaque tronçon à au moins une imprimante maître, les tronçons étant répartis sur lesdites imprimantes maîtres ;
**caractérisé en ce que** chaque imprimante maître effectue des étapes de :
- réception (6.3), en provenance du client d'impression, d'au moins un tronçon de document ;
- fourniture (6.6) à une imprimante, en réponse à une requête de ladite imprimante, d'au moins un tronçon parmi le ou les tronçon(s) reçu(s) ;
et **en ce que** au moins une imprimante effectue des étapes de :
- requête auprès d'au moins une imprimante maître d'au moins un tronçon de document correspondant au document à imprimer ;
- réception (5.5) du ou des tronçon(s) requis ;
- reconstitution (5.6) du document à imprimer au moins à partir du ou des tronçon(s) reçu(s) ;
- lancement d'une impression (5.8) du document à imprimer reconstitué.

14. Programme d'ordinateur, **caractérisé en ce qu'**il comprend des instructions pour mettre en oeuvre, lorsque ledit programme est exécuté par un processeur, le procédé selon la revendication 9 et/ou selon la revendication 10 et/ou selon la revendication 11, ou selon la revendication 13.

15. Moyens de stockage, **caractérisés en ce qu'**ils stockent un programme d'ordinateur comprenant des instructions pour mettre en oeuvre, lorsque ledit programme est exécuté par un processeur, le procédé selon la revendication 9 et/ou selon la revendication 10 et/ou selon la revendication 11, ou selon la revendication 13.
